# EUROPEAN PATENT APPLICATION

(11) **EP 1 584 364 A2**
(43) Date of publication of application: **12.10.2005**
(21) Application number: 05100318.4
(22) Date of filing: 19.01.2005
(51) Int. Cl.: A63F 13/10

(54) **Shooting game apparatus, storage medium storing game program and game controlling method**

(30) Priority: 03.02.2004 JP 2004026209
(71) Applicant: Nintendo Co., Limited, Kyoto (JP)
(72) Inventor: Sakamoto, Yoshio, Minami-ku, Kyoto-shi, Kyoto (JP); Yamano, Katsuya, Minami-ku, Kyoto-shi, Kyoto (JP)
(74) Representative: Perkins, Sarah

(57) **Abstract**

A game apparatus includes an LCD, and on the LCD, a game screen is displayed. On the game screen, a player object and an enemy object are displayed, and the player object shoots a bullet at an enemy object according to an operation by a player. During the game, an ineffective state in which a target such as the enemy object is not damaged even if it is shot by a bullet and in an effective state in which the target is damaged if it is shot by a bullet are switched every predetermined time period. It is noted that when the player object shoots a bullet in the effective state, the effective state is maintained irrespective of the predetermined time period.

## Description

### BACKGROUND OF THE INVENTION

### Field of the invention

The present invention relates to a shooting game apparatus, a storage medium storing a game program, and a game controlling method. More specifically, the present invention relates to a shooting game apparatus that has at least a display means and an operating means, and with which a player plays a game by shooting a target displayed on the display means according to an operation by the operating means, a storage medium storing a game program, and a game controlling method.

### Description of the prior art

Conventionally, a game called a shooting game has been widely known, and a number of games of this kind have been played. For example, there exists a game of shooting an enemy character by shooting a bullet from a player character operated by a player himself according to an operation of a game controller by the player, or a game of shooting a target appearing in the screen by use of a gun-shaped controller.

An example of this kind of a conventional shooting game apparatus is disclosed in Japanese Patent Laying-open No. 3262769 [A63F 13/00, A63F 13/10]. In the prior art, a different disappearing time is set to a target such as an enemy character for every region of the character, and when a bullet hits (shoots) a target, a region of the character corresponding to the impact area is detected, and the disappearing time is determined according to the result of the detection. For example, in a case that a bullet hits a vital spot, a disappearing time is set to render short in comparison with a case where a bullet hits a region except for the vital spot.

In addition, another example of this kind of a conventional shooting game apparatus is disclosed in Japanese Patent Laying-open No. 3262770 [A63F 13/04, A63F 13/00, A63F 13/10]. In this prior art also, similarly to the prior art disclosed in Japanese Patent Laying-open No. 3262769 [A63F 13/00, A63F 13/10], a different disappearing time is set to a target such as an enemy character every region of the character, and when the bullet hits a target, an additional shooting can be performed during a predetermined time period. When a bullet hits the target by the additional shooting, a disappearing time of the target is set to render shorter than a case where the bullet hits once.

However, in both prior arts, even if fmding the enemy character entering from shadows and shooting the bullet at the enemy object, in some cases, due to the gap in the timing of shooting the bullet by the player object, the enemy object hides within the shadows to make the bullet shot with effort meaningless. Thus, the player feels the shooting operation meaningless, and has discomfort about the game playing. Furthermore, similarly, after a bullet is shot, in a case that the player object hides within shadows at a timing when the bullet is about to reach the enemy object, the player becomes suspicious about a determination whether the enemy character (target) is hit or not. In addition, in some cases, there is a case of making the bullet shot with effort meaningless, and therefore, it may be possible that the player feels difficult to play the game, giving up of making progress in playing the game.

### SUMMARY OF THE INVENTION

Therefore, it is a primary object of the present invention to provide a novel shooting game apparatus, storage medium storing a game program, and game controlling method.

Another object of the present invention is to provide a shooting game apparatus, a storage medium storing a game program, and a game controlling method capable of savoring original enjoyment of a shooting game without making a shooting operation by a player during an effective period meaningless.

A shooting game apparatus according to the present invention is provided with at least a display means and an operating means, with which a player plays a game by shooting a target displayed on the display means by operating the operating means. The shooting game apparatus further includes a target state switching means and a shooting state determining means. The target state switching means switches according to a predetermined condition between an ineffective state in which the target is not damaged even if a bullet hits the target and an effective state in which the target is damaged when a bullet hits the target. The shooting state determining means determines whether or not at least a shooting is performed in response to an input from the operating means. Then, the target state switching means holds the effective state when it is determined that the shooting is performed in the effective state by the shooting state determining means.

More specifically, the shooting game apparatus (10: a reference numeral corresponding in the "preferred embodiment" described later and so forth) is provided with at least the display means (14) and the operating means (42). In the shooting game apparatus (10), the player shoots (fires) a bullet at the target (104) displayed on the display means (14) by operating the operating means (42). The target state switching means (40, S1, S13) switches according to a predetermined condition between the ineffective state in which the target (104) is not damaged even if a bullet hits the target and the effective state in which the target (104) is damaged when a bullet hits the target. The shooting state determining means (40, S3, S39) determines whether or not the shooting is performed in response to the input from the operating means (42) by the player. Then, the target state switching means (40, S1, S13) holds (maintains) the effective state when it is determined that the shooting is performed in the effective state by the shooting state determining means (40, S3, S39) ("YES" in a S39).

According to this invention, in a case that the shooting is performed in the effective state, the effective state is held irrespective of the predetermined condition, capable of surely making the most use of the shot bullet. That is, there occurs no waste of the shooting operation, capable of savoring an original enjoyment of shooting in the shooting game.

In one embodiment of the present invention, the target state switching means switches between the effective state and the ineffective state at every predetermined time period when it is determined the shooting is not performed in the effective state by the shooting state determining means. More specifically, the target state switching means (40, S1, S13) switches between the effective state and the ineffective state at every predetermined time period when it is determined that the shooting is not performed in the effective state by the shooting state determining means (40, S3, S39) (in the S39 "NO"). That is, in general, the effective state and the ineffective state are switched every predetermined time period, and when a shooting is performed in the effective state, the effective state is held, capable of enjoying shooting the target at a difficulty level adequately set. Furthermore, the player is not suspicious about the determination of the hitting.

In one aspect of this invention, a shooting game apparatus further comprises a target hit determining means for determining whether or not the bullet hits the target in the effective state, and the target state switching means cancels hold of the effective state when it is determined that the bullet hits the target by the target hit determining means. More specifically, the target hit determining means (40, S9, S11) determines whether or not the bullet hits the target in the effective state. The target state switching means (40, S1, S13) cancels the hold of the effective state when it is determined that the bullet hits the target by the target hit determining means (40, S9, S11) ("YES" in steps S9 and S11). Thus, when the bullet hits the target, the hold of the effective state is canceled, capable of increasing an interest of the game due to the addition of difficulty of shooting the target to some extent.

In another aspect of this invention, a display means displays a player object that performs an shooting action according to an operation by the player, and further comprises a player object position storing means for storing a position of the player object within a virtual game space, a target position storing means for storing a position of a target within the virtual game space, and an activating means for activating the target state switching means when the position of the player object and the position of the target have a predetermined relationship. More specifically, the display means (14) displays the player object (102) that performs the shooting action according to the operation by the player. The player object position storing means (40, 44) stores the position of the player object (102) within the virtual game space, and the target position storing means (40, 44) similarly stores the position of the target (104) within the virtual game space. The activating means (40) activates the target state switching means (40, S1, S13) when the position of the player object (102) and the position of the target (104) have the predetermined relationship such as being equal to or less than a predetermined distance from each other. Thus, only after the position of the player object and the position of the target have the predetermined relationship, it becomes possible to shift between the effective state and the ineffective state, capable of improving a savor of the game.

A shooting game apparatus according to the present invention is a shooting game apparatus provided with at least a display means and an operating means, with which a player instructs at least an action of player object according to an operation of the operating means by the player, thereby plays a game by shooting a target displayed on the display means, and further includes a player object controlling means, a target state switching means, and a shooting state determining means. The player object controlling means controls an action of the player object in response to an operation of the operating means. The target state switching means switches according to a predetermined condition between an ineffective state in which the target is not damaged even if a bullet hits the target and an effective state in which the target is damaged when a bullet hits the target. The shooting state determining means determines whether or not the player object performs a shooting in response to an operation of the operating means. Then, the target state switching means holds the effective state when it is determined that the shooting is performed in the effective state by the shooting state determining means.

More specifically, the another invention is the same as the above-described invention except that the player object controlling means (40, S10, S19, S21, S23) causes the player object (102) to perform a shooting action according to the operation by the player, and therefore, there occurs no waste of the shooting operation, capable of savoring an original enjoyment of shooting in the shooting game.

In a storage medium storing a game program according to this invention, the game program is executed by the shooting game apparatus. The game apparatus is provided with at least a display means and an operating means, with which a player plays a game by shooting a target displayed on the display means according to an operation of the operating means by the player. The game program causes a processor of the shooting game apparatus to execute a target state switching step and a shooting state determining step. The target state switching step switches according to a predetermined condition between an ineffective state in which the target is not damaged even if a bullet hits the target and an effective state in which the target is damaged when a bullet hits the target. Furthermore, the shooting state determining step determines whether or not at least a shooting is performed in response to an input from the operating means. Then, the target state switching step holds the effective state when it is determined that the shooting is performed in the effective state by the shooting state determining step.

In the invention of the storage medium also, similarly to the above-described invention of the shooting game apparatus, there occurs no waste of the shooting operation, capable of savoring an original enjoyment of shooting in the shooting game.

In a storage medium storing another game program according to this invention, the game program is executed by a shooting game apparatus. The shooting game apparatus is provided with at least a display means and an operating means, with which a player instructs at least an action of a player object according to an operation of the operating means by the player, and thereby, plays a game by shooting a target displayed on the display means. The game program causes a processor of the shooting game apparatus to execute a player object controlling step, a target state switching step and a shooting state determining step. A player object controlling step controls an action of the player object in response to an operation of the operating means. A target state switching step switches according to a predetermined condition between an ineffective state in which the target is not damaged even if a bullet hits the target and an effective state in which the target is damaged when a bullet hits the target. A shooting state determining step determines whether or not the player object performs a shooting in response to an operation of the operating means. Then, the target state switching step holds the effective state when it is determined that the shooting is performed in the effective state by the shooting state determining step.

In the invention of the storage medium also, similarly to the above-described invention of the shooting game apparatus, there occurs no waste of the shooting operation, capable of savoring an original enjoyment of shooting in the shooting game.

A game controlling method according to this invention is a game controlling method of a shooting game apparatus provided with at least a display means and an operating means, with which a player plays a game by shooting a target displayed on the display means according to an operation of the operating means by the player. The game controlling method comprises (a) a step of switching according to a predetermined condition between an ineffective state in which the target is not damaged even if a bullet hits the target and an effective state in which the target is damaged when a bullet hits the target, and (b) a step of determining whether or not at least a shooting is performed in response to an input from the operating means by the player, wherein the step (a) includes a step (a-1) of holding the effective state when it is determined that the shooting is performed in the effective state by the step (b).

In the invention of the game controlling method, similarly to the above-described invention of the shooting game apparatus, there occurs no waste of the shooting operation, capable of savoring an original enjoyment of shooting in the shooting game.

Another game controlling method according to this invention is a game controlling method of a shooting game apparatus provided with at least a display means and an operating means, with which a player instructs at least an action of a player object according to an operation of the operating means, and thereby, plays a game by shooting a target displayed on the display means. The game controlling method comprises (a) a step of controlling an action of the player object in response to an operation of the operating means; (b) a step of switching according to a predetermined condition between an ineffective state in which the target is not damaged even if a bullet hits the target and an effective state in which the target is damaged when a bullet hits the target; and (c) a step of determining whether or not the player object performs a shooting in response to an operation of the operating means; wherein the step (b) includes a step (b-1) of holding the effective state when it is determined that the shooting is performed in the effective state by the step (c).

In the invention of the game controlling method also, similarly to the above-described invention of the shooting game apparatus, there occurs no waste of the shooting operation, capable of savoring an original enjoyment of shooting in the shooting game.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an illustrative view showing one example of a game apparatus according to this invention;
Figure 2 is a block diagram showing an electric configuration of the game apparatus shown in Figure 1;
Figure 3 is an illustrative view showing a memory map of a ROM provided in a game cartridge shown in Figure 2;
Figure 4 is an illustrative view showing a memory map of a WRAM provided in the game machine shown in Figure 2;
Figure 5 is an illustrative view showing one example of a table for counter shown in Figure 4;
Figure 6 is an illustrative view showing one example of a game screen to be displayed on an LCD of the game machine shown in Figure 1 and Figure 2;
Figure 7 is an illustrative view showing another example of a game screen to be displayed on the LCD of the game machine shown in Figure 1 and Figure 2;
Figure 8 is an illustrative view showing the other example of a game screen to be displayed on the LCD of the game machine shown in Figure 1 and Figure 2;
Figure 9 is an illustrative view showing a further example of a game screen to be displayed on the LCD of the game apparatus shown in Figure 1 and Figure 2;
Figure 10 is a flowchart showing a part of a battle scene process of a CPU shown in Figure 2;
Figure 11 is a flowchart showing another part of the battle scene process of the CPU shown in Figure 2; and
Figure 12 is a flowchart showing a state transition process of a target of the CPU shown in Figure 2.

### DETAILED DESCRIPTION OF THE PREFERRED EMBODIMENTS

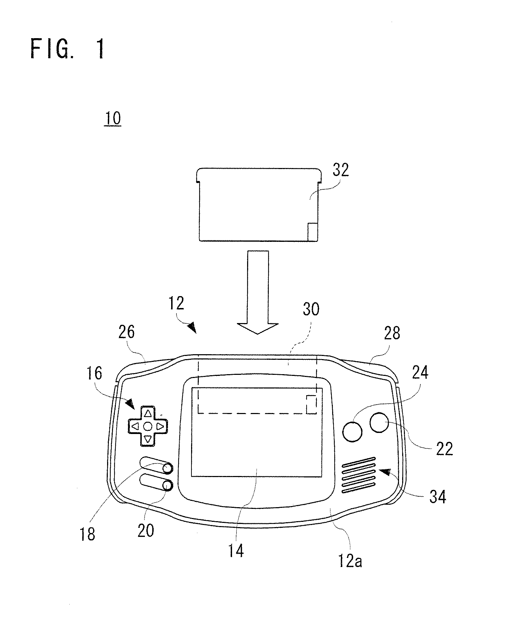

Referring to Figure 1, a game apparatus 10 of one embodiment of the present invention includes a game machine 12. As such the game machine 12, a hand-held type game machine such as GAMEBOY ADVANCE (product name) is applicable. The game machine 12 has, on the surface of a housing (case) 12a thereof, provided with a color liquid crystal display (hereinafter, referred to as "LCD") 14 at an approximately center. On the LCD 14, a game space and game characters appearing in the game space such as a player object are displayed, and messages are also displayed as necessary. Also on the surface of the case 12a, operating buttons 16, 18, 20, 22, 24, 26, and 28 are provided. The operating buttons 16, 18 and 20 are placed at the left of the LCD 14, and the operating buttons 22 and 24 are placed at the right of the LCD 14. Furthermore, the operating buttons 26 and 28 are placed at an upper end surface (above the LCD) of the case 12a.

The operating button 16 is a cross button which functions as a digital joystick, and is able to instruct a moving direction of the game characters and move a cursor displayed on the LCD 14 by operating any one of four depression portions. The operating button 18 is a start button formed by a push button, and utilized for instructing a start of the game, etc. The operating button 20 is a select button formed by the push button, and utilized for selecting a game mode, etc.

The operating button 22 is an A button formed by the push button, and allows the game character (player object) displayed on the LCD 14 to perform an arbitrary action such as shooting, hitting, throwing, holding, jumping, riding, cutting, talking, etc. The operating button 24 is a B button formed by the push button, and utilized for changing to a game mode selected by the select button 20, canceling the action determined by the A button 22, and so forth. The operating button 26 is a left depression button (L button) formed by the push button, and the operating button 28 is a right depression button (R button) formed by the push button. The operating buttons 26 and 28 can perform the same operation as the A button 22 and the B button 24, and also function as a subsidiary of the A button 22 and the B button24.

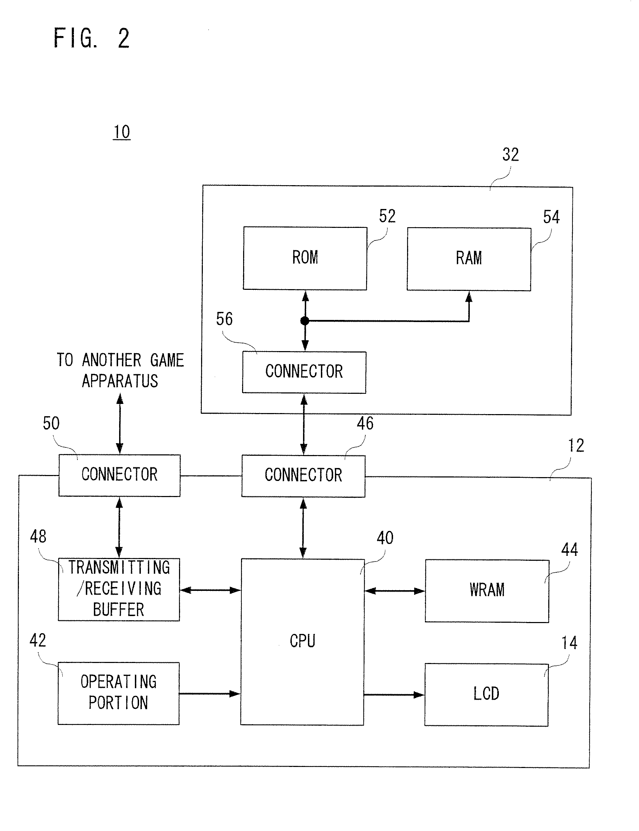

Also, on the rear surface of the case 12a at an upper end, a loading slot 30 is provided. Into the loading slot 30, a game cartridge 32 is loaded. Although not illustrated, connectors are respectively provided at a depth portion of the loading slot 30 and at an end portion of the game cartridge 32 in the loading direction, and when the game cartridge 32 is loaded into the loading slot 30, the two connectors are connected with each other. Therefore, the game cartridge 32 is accessible by a CPU 40 of the game machine 12 (see Figure 2).

Furthermore, on the surface of the case 12a below the A button 22 and the B button 24, a speaker 34 for outputting a game music (BGM), a sound effect (sound of a gun), a sound such as voices or onomatopoeic sound of the game character during the game, and so on is provided.

It is noted that although not illustrated, the case 12a is provided with an external expansion connector on its upper surface, a battery accommodating box on its rear surface, and a power switch, a sound volume switch, an earphone jack, etc. on its bottom surface.

An electric configuration of the game apparatus 10 is shown in Figure 2. With referring to Figure 2, the game machine 12 is provided with the CPU 40 as described above. The CPU 40 is also called a computer or a processor, and entirely controls the game machine 12. The CPU 40 or the computer is connected with the above-described LCD 14, an operating portion 42 and a WRAM (WRAM) 44 via an internal bus, and also connected with a connector 46 and a transmitting/receiving buffer 48, etc.

The LCD 14 receives display data from the CPU 40 to display a game image (game screen). It is noted that although illustration is omitted, the CPU 40 is connected with, for example, a VRAM, an LCD controller, etc, and under control of the CPU 40, game image data such as background image data, object image data including a player object, a non-player objects, an item objects, etc. are rendered in the VRAM. Herein, the player object is a moving image object whose arbitrary action such as a movement is controlled in response to an operation by the player. The non-player object is a moving image object whose arbitrary action such as movement, etc. is controlled by the computer (CPU 40) rather than in response to an operation by the player. Then, the LCD controller reads the game image data (display data) rendered in the VRAM according to the instruction from the CPU 40 to display a game image on the LCD 14.

The operating portion 42 includes the above-described respective operation buttons 16, 18, 20, 22, 24, 26, 28, and an operation input signal corresponding to an operation of each of these buttons is applied to the CPU 40. Accordingly, the CPU 40 executes a processing according to the instruction by the player (user) through the operating portion 42.

The WRAM 44 is a writable/readable memory, and is utilized as a working area and a buffer area of the CPU 40. The transmitting/receiving buffer 48 is, for example, temporarily storing transmitting/receiving data during a communication play of a multiplayer game, and connected to an external expansion connector 50. By connecting another game apparatus 10 (game machine 12) to the connector 50 with the use of a communication cable not shown, it becomes possible to perform data communications among a plurality of game apparatuses 10.

Although illustration is omitted, the CPU 40 is connected with a speaker 34 shown in Figure 1 via a sound circuit, and when sound data is applied from the CPU 40 to the sound circuit, sounds necessary for the game are output from the speaker 34.

The game cartridge 32 is provided with a ROM 52 and a RAM 54, and the ROM 52 and the RAM 54 are connected with each other via a bus, and connected to a connector 56. Therefore, when the game cartridge 32 is loaded into the game machine 12 to connect the connector 46 and the connector 56, the CPU 40 is electrically connected to the ROM 52 and the RAM 54. This allows the CPU 40 to read out predetermined program data from a predetermined area of the ROM 52 to develop it in the WRAM 44, read out predetermined backup data to write it in the WRAM 44, write to a predetermined area in the RAM 54 the game data, and so on generated in correspondence to the progress of the game in the WRAM 44 to store (save) it, and so forth.

It is noted that although, a flash memory being a non-volatile memory is applicable as the RAM 54, another non-volatile memory such as a ferroelectric memory (FeRAM), an EEPROM, etc. is also applicable. Also, an SRAM, a DRAM, etc. that use a batter as a power may be utilized.

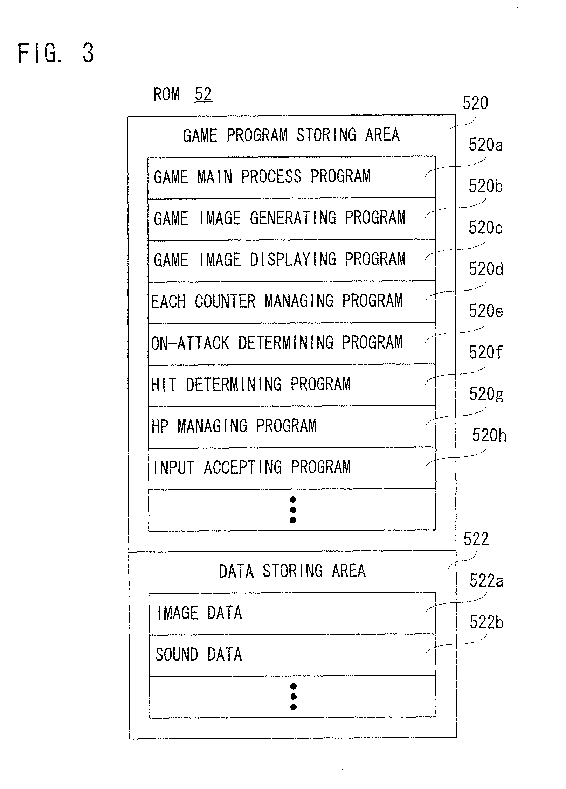

Figure 3 shows a memory map of the ROM 52. Referring to Figure 3, the ROM 52 includes a game program storing area 520 and a data storing area 522. The game program storing area 520 stores a game program, and the game program consists of a game main process program 520a, a game image generating program 520b, a game image displaying program 520c, an each counter managing program 520d, an on-attack determining program 520e, a hit determining program 520f, an HP managing program 520g, an input accepting program 520h, etc.

The game main process program 520a is a program for executing a main process of a virtual game (shooting game in this embodiment) to be executed in the game machine 12. The game image generating program 520b is a program for generating game images such as a player object, a non player object (enemy object, and so on), an item object (object such as a gun to be used by the player object and the non player object in this embodiment), a background object, etc. The game image displaying program 520c is a program for displaying on the LCD 14 the game image generated by the game image generating program 520b.

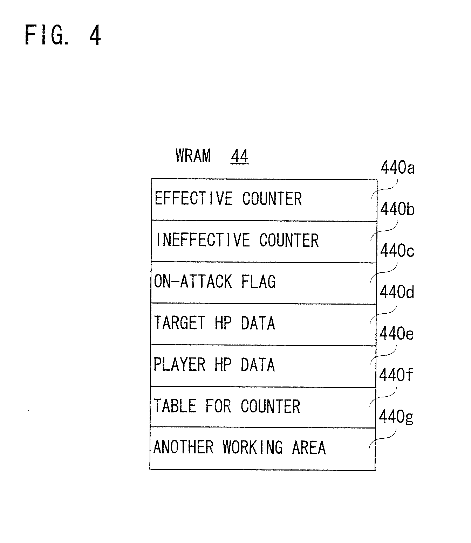

The each counter managing program 520d is a program for managing counters to be temporarily stored (provided) in the WRAM 44 during the game. In this embodiment a count (increment, decrement) and count values of an effective counter 440a and an ineffective counter 440b described later are managed (see Figure 4). The on-attack determining program 520e is a program for determining whether or not an attack of the player object continues, that is, whether or not the player object shoots (fires) a bullet, and turns an on-attack flag 440c on or off according to the determination result as described later (see Figure 4).

The hit determining program 520f is a program for determining whether or not the bullet shot by the player object hits the non player object such as the enemy object. The HP managing program 520g is a program for managing an HP (life) of the player object and the enemy object (target). More specifically, this is for subtracting an HP of the damaged object, or turning on a game over flag (not illustrated) when an HP of the player object becomes 0, turning on a game clear flag (not illustrated) when an HP of the enemy object becomes 0, and so forth. The input accepting program 520h is a program for accepting an input by the player, that is, detecting an input signal from the operating portion 42.

It is noted that although illustration is omitted, in the game program storing area 520, another program required for controlling a game such as a sound controlling program, a communication controlling program, a backup program, a game end processing program, etc. are also stored. The sound controlling program is a program having sound data 522b described later such as music data, acoustic wave-shaped data, and a program for generating and outputting a sound such as a game music, a sound effect, voices or an onomatopoeic sound of the object. The communication controlling program is a program for controlling a data communication with another game apparatus 10 (game machine 12). The backup program is a program for storing (saving) in the RAM 54 proceeding data and result data according to an instruction from the player and according to a predetermined event. The game end processing program is a program for ending the game process due to game over and according to an operation (instruction) by the player.

In the object data storing area 522, data required for the shooting game such as image data 522a, sound data 522b, etc. is stored. The image data 522a is data of the object such as a player object, a non player object, an item object, a background object, etc. The sound data 522b is music data for outputting the above-described sound and acoustic wave-shaped data that are required for the game.

It is noted that such the game program and data are read by the CPU 40 entirely at a time or partially and sequentially so as to be stored (loaded) into the WRAM 44.

Figure 4 shows a memory map of the WRAM 44. On the WRAM 44, an effective counter 440a, an ineffective counter 440b, an on-attack flag 440c, target HP data 440d, player HP data 440e and a table for counter 440f are stored, and another working area 440g is provided.

The effective counter 440a is a counter for defining a period during which an attack on the target (enemy object) is effective (effective state of period), and a down counter, for example, consisting of a register. Here, the effective period of the attack on the target means a period during which in a case that a bullet shot by the player hits a target, it is possible to cause damage to the target. Furthermore, in this embodiment, the effective counter 440a is decremented per unit of time.

The ineffective counter 440b is a counter for defming a period during which an attack on the target (enemy object) is ineffective (ineffective state of period), and is a down counter, for example, consisting of a register. Here, the ineffective period of the attack on a target means a period during which even if a bullet shot by the player hits the target, it is impossible to cause damaged to the target. Furthermore, in this embodiment, the ineffective counter 440b is decremented per unit of time (the same as the unit of time for decrementing the effective counter 440a).

It is noted that in this embodiment, during the game, the effective period of the attack and the ineffective period of the attack are alternately repeated, and therefore, both of the count values of the effective counter 440a and the ineffective counter 440b never becomes "0" at the same time.

The on-attack flag 440c is a flag for determining whether or not the player object attacks the enemy object, and consists of a register of 1 bit, for example. If being on attack, the value of the register (data value) is set to "1", and if not being on attack, the data value of the register is set to "0".

The target HP data 440d is numerical value data for an HP (target HP) of the target (enemy object), has a default value determined in advance according to a kind and level (mighty) of the target at the start of the game, and then, subtracted by a damage every time that an attack of the player object hits in the effective state. When the numerical value indicative of the target HP data 440d becomes "0", the target (enemy object) dies. That is, it disappears from the game screen.

The player HP data 440e is numerical value data for an HP (player HP) of the player object, has a default value determined in advance according to a kind and level (mighty) of the player object at the start of the game, and then, due to the hit of an attack of the enemy object, walk into a trap, and so forth, subtracted by the damage of the attack or the trap. When the numerical value indicative of the player HP data 440e becomes "0", the player object dies. That is, the game is ended. Furthermore, in some cases, the HP of the player object is increased when the level of the player object is up, or a specific item is obtained during the game.

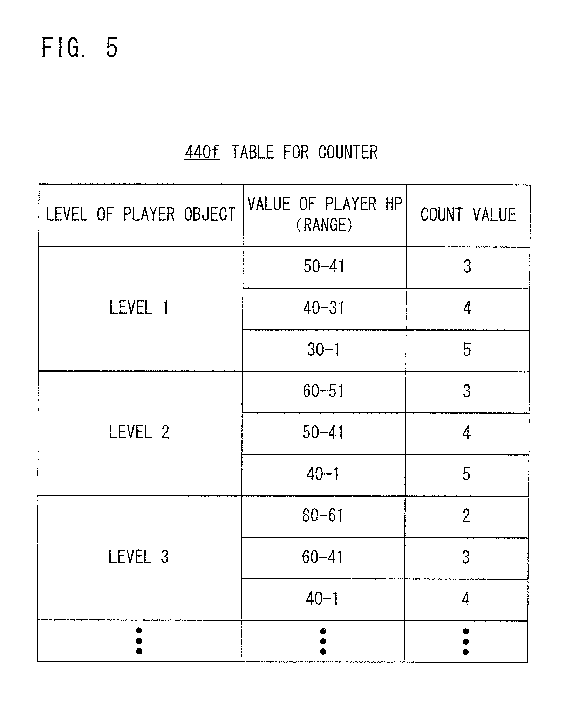

The table for counter 440f is table data to be referred when setting and resetting the default value of the effective counter 440a and the ineffective counter 440b. Although omitted in Figure 3, the table for counter 440f is stored in the data storing area 522 of the ROM 52, read by the CPU 40, and stored (loaded) into the RAM 44. Figure 5 shows one example of the table for counter 440f. Referring to Figure 5, the table for counter 440f has a count value determined in advance according to the level of the player object and the value of the player HP (range of numerical value).

Accordingly, in a case that the player object is a level 1, and the value of the player HP is in the range 50 to 41, "3" is set as the default value (count value) when the effective counter 440a and the ineffective counter 440b are set (or reset). Furthermore, in a case that the value of the player HP is in the range 40 to 31 in the same level 1, "4" is set as the count value when the effective counter 440a and the ineffective counter 440b are set (reset). In addition, in a case that the value of the player HP is in the range 30 to 1 in the same level 1, "5" is set as the count value when the effective counter 440a and the ineffective counter 440b are set (reset).

It is noted that the same is true for a case that the player object is in a level 2 and a level 3. However, as described above, as the level of the player object is up, the player HP is increased, and therefore, the value of player HP (range) in the table for counter 440f is slightly deferent according to the level of the player object.

Furthermore, in this embodiment, as the level of the player object is down, or the value of the player HP is small, the count values set to the effective counter 440a and the ineffective counter 440b are set to become a large value. However, it is not limited thereto, and the count value is set to a small value.

In addition, although the count values set to the effective counter 440a and the ineffective counter 440b are set in common with each other in this embodiment, the count value may be determined separately.

Furthermore, in this embodiment, the count values of the effective counter 440a and the ineffective counter 440b are determined depending on the level and the value of the player HP of the player object. However, the count value of the effective counter 440a and the ineffective counter 440b may be determined according to the level (or kind) of the target, that is, the enemy object and the value of the target HP.

In addition, in this embodiment, the count values set to the effective counter 440a and the ineffective counter 440b are determined by use of the table for counter 440f created in advance in order to reduce the arithmetic process. However, this is operated by a function (equation) with the use of the level of the player object (or enemy object) and the value of the player HP (or target HP). In this case, it is possible to reduce an amount of data to be stored in the ROM 52 or the WRAM 44.

Returning to Figure 4, in the WRAM 44, another working area 440g is provided, and in another working area 440g, the above-described game program and data are stored, and another game data (proceeding data and result data) and the flag (game clear flag, game over flag, etc.) generated during the game are also stored. In addition, another working area 440g is utilized in a case of executing another operation necessary for the game processing.

For example, the shooting game of this embodiment is a game in which the player object clears each state, and attains a final purpose by moving on the stage (field), battling with the enemy object (gun battle) according to the operation by the player, and so forth.

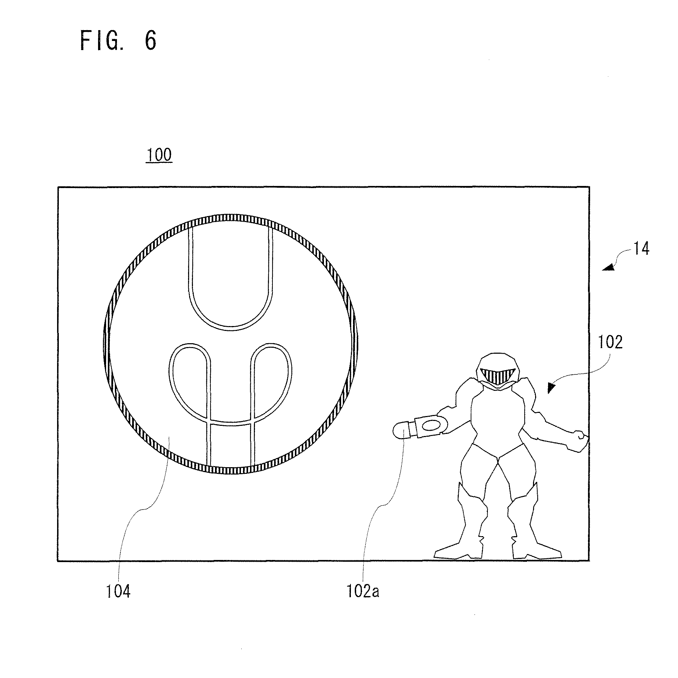

Figure 6 is an illustrative view showing one example of a game screen 100 in a certain stage, and the game screen 100 is displayed on the LCD 14 shown in Figure 1 and Figure 2. On the game screen 100, a player object 102 and a target (enemy object) 104 are displayed. It is noted that although illustration is omitted, a background object, etc. is displayed on the game screen 100. As to the player object 102 in this embodiment, a right hand 102a of itself is arms for launching and emitting a missile and beam (hereinafter, referred to as "bullet") according to an operation by the player (turning on the A button 22 in this embodiment) to attack the enemy object 104.

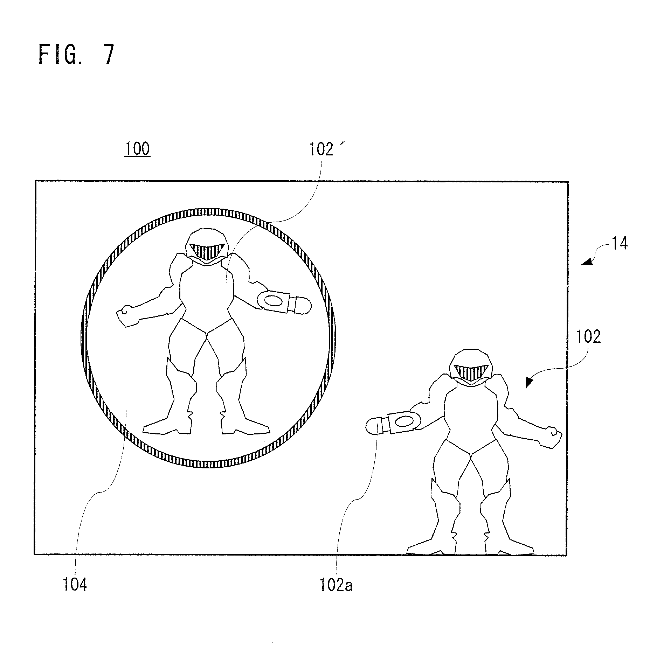

On the other hand, the enemy object 104 is displayed differently between a damaged state in which the enemy object is damaged when the bullet shot by the player object hits (effective state) and an undamaged state in which the enemy object is not damaged when the bullet shot by the player object hits (ineffective state). For example, in the effective state, the enemy object 104 in this embodiment is displayed as a simple normal object as shown in Figure 6 while in the ineffective state, it is displayed as a mirror object as shown Figure 7.

It is noted that Figure 7 shows the game screen 100 in which an image 102' of the player object 102 is mirrored on the enemy object 104 displayed as the mirror object 104.

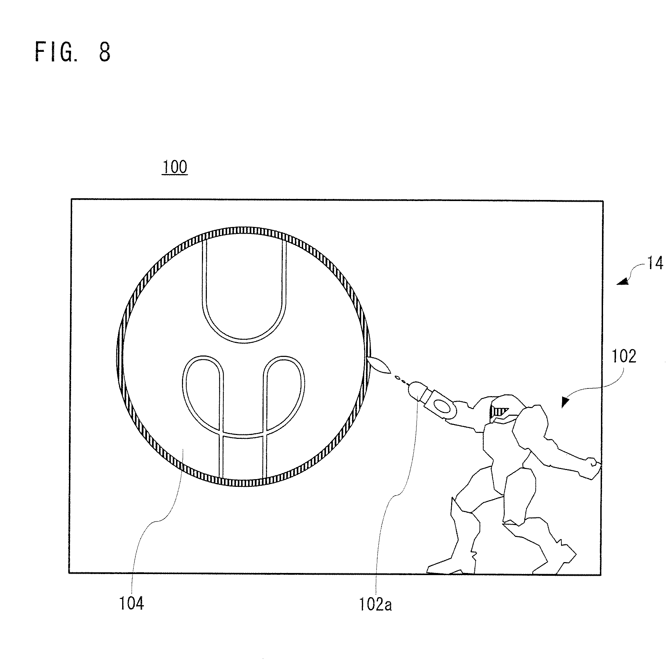

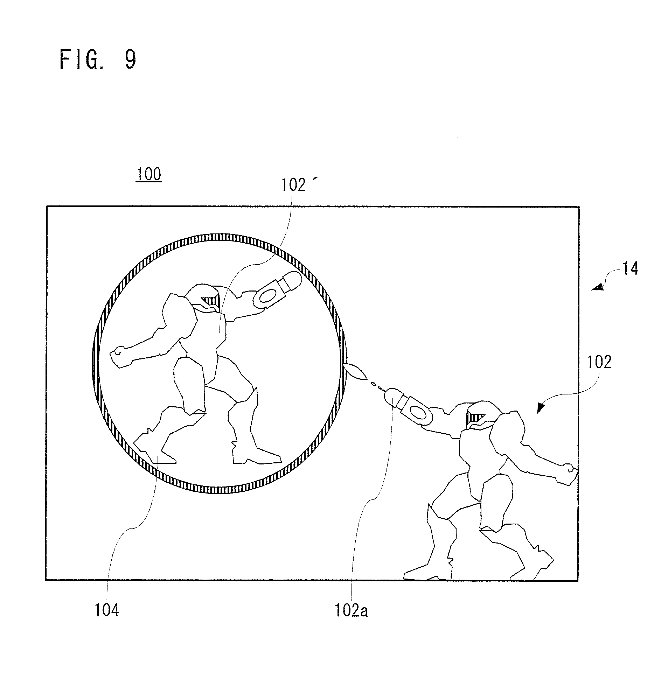

That is, as shown in Figure 8, when the player object 102 shoots a bullet to make an attack, and shoots (hits) the enemy object 104 by the bullet in the effective state, the enemy object 104 is damaged. On the other hand, as shown in Figure 9, when the player object 102 shoots a bullet to make an attack, and shoots (hits) the enemy object 104 by the bullet in the ineffective state, the player object 102 is damaged due to the bullet hitting the image 102' of the player object 102, or the bullet being reflected by a mirror surface of the enemy object 104. Thus, it is impossible to cause damage to the enemy object 104 in the ineffective state.

In a general shooting game, the ineffective state in which the enemy object keeps within the shadow and cannot be damaged when the enemy object being attacked by the player object, and the effective state in which the enemy object appears from the shadows and is damaged due to the enemy object being hit by the bullet shot by the player object are switched at a predetermined time period.

However, even if the player inputs an instruction indicative of making the player object perform a shooting action, and the player object shoots the bullet at the enemy object (target), it may be possible that the enemy object hides within shadows to make the bullet shot with effort meaningless due to the gap in the timing of shooting the bullet. Thus, the player feels the shooting operation meaningless, and has discomfort about game playing. Furthermore, similarly, after the player object shoots a bullet, in a case that the enemy object hides within shadows at a timing when the bullet is about to reach the enemy object, the player becomes suspicious about whether the enemy character (target) is hit or not. In addition, in some cases, it becomes meaningless to shoot the bullet with effort, and therefore, it may be possible that the player feels difficult to play the game, giving up of making progress in playing the game.

In order to avoid these, in this embodiment, when the player object 102 shoots a bullet at the enemy object 104 in the effective state, that is, when being on attack, the effective state is held (maintained), and whereby, the bullet shot by the player object 102 is sure to be meaningful. Thus, it becomes possible to savor an original interest of shooting in the shooting game.

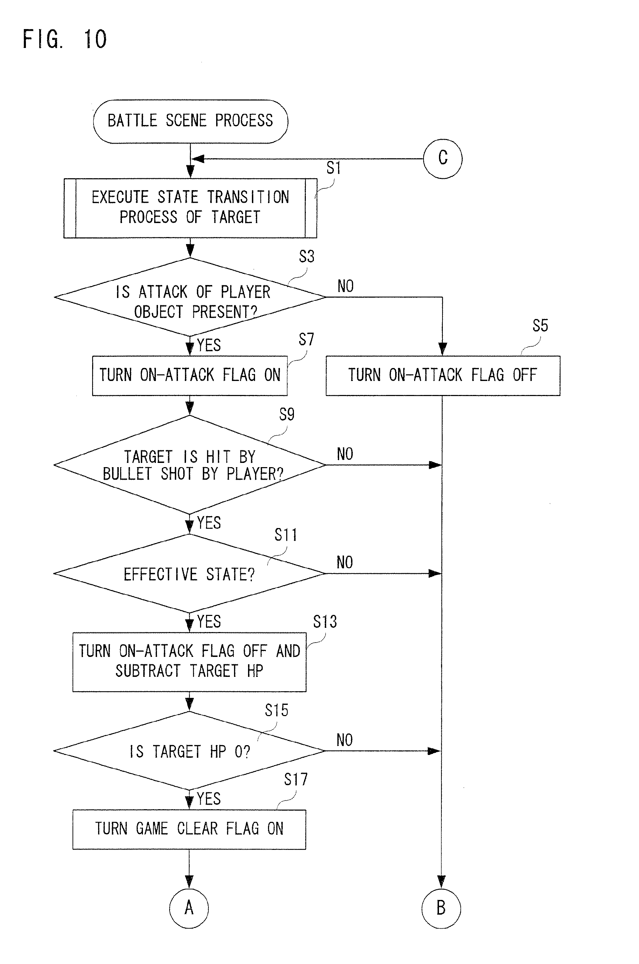

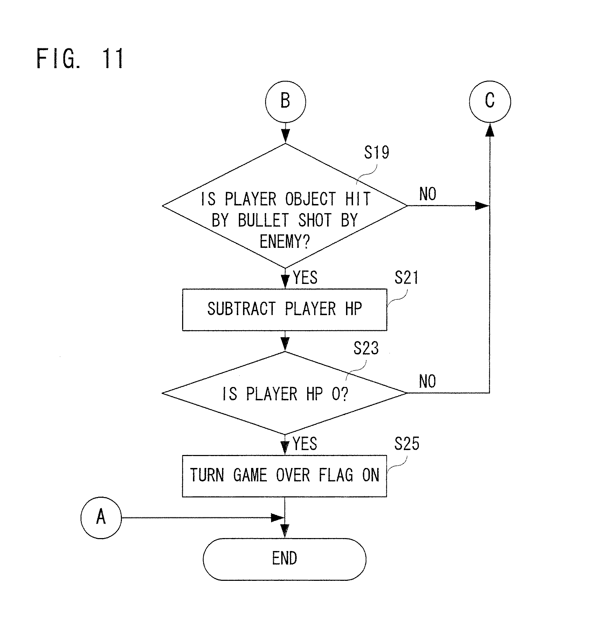

More specifically, the CPU 40 shown in Figure 2 executes a battle scene process as shown in Figure 10 and Figure 11. Although not illustrated, the CPU 40 manages the positions of the player object 102 and the enemy object 104 within the virtual game space on the WRAM 44, and determines a battle mode in a case a predetermined relationship such as the positions of the player object 102 and the enemy object 104 being close with each other is satisfied. Then, the battle scene process is started. The battle scene process is executed in parallel with the game main process in the battle mode.

It is noted that although illustration is omitted, the game main process is for developing the game according to a story, generating and displaying the game images (game screen 100) according to the story and the operation of the player, outputting a sound necessary for the game, backing up the game data according to the predetermined event and an operation by the player, executing the game end process, and so forth.

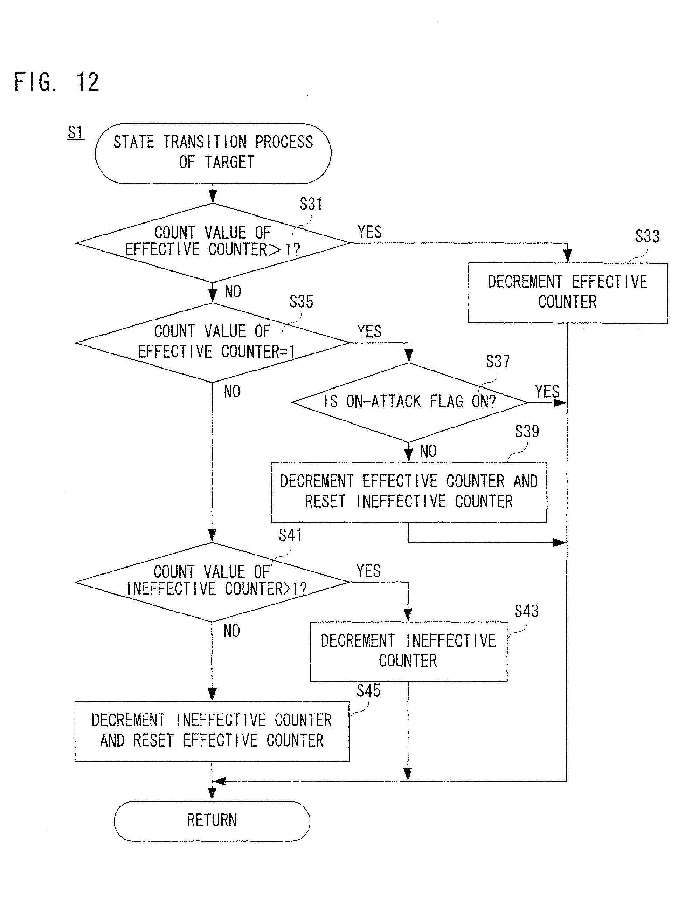

Referring to Figure 10, in the battle mode, the CPU 40 starts a battle scene process, and executes a state transition process of the target (see Figure 12) described later in a step S1. Briefly, in the step S1, the effective state and the ineffective state are switched, the effective state is held, and so forth. In a succeeding step S3, it is determined whether or not the player object makes an attack. That is, it is determined whether or not the A button 22 is turned on to cause a state in which the player object 102 shoots a bullet. If the A button 22 is not turned on, it is determined the attack by the player object 102 is absent, "NO" is determined in the step S3, the on-attack flag 440c is turned off (data value is set to "0") in a step S5, and the process proceeds to a step S19 shown in Figure 11.

On the other hand, if the A button 22 is turned on, it is determined the attack by the player object 102 is present, "YES" is determined in the step S3, and the on-attack flag 440c is turned on (data value is set to "1") in a step S7. In a succeeding step S9, it is determined whether or not the bullet hits the target. That is, it is determined whether or not the bullet shot by the player object 102 hits the enemy object 104.

If "NO" in the step S9, that is, if the bullet does not hit the target, the process directly proceeds to the step S 19. On the other hand, if "YES" in the step S9, that is, if the bullet hits the target, it is determined whether or not to be the effective state in a step S11. That is, it is determined whether or not the count value of the effective counter 440a is equal to or more than 1. If the count value of the effective counter 440a is 0, and the ineffective state is held, the process directly proceeds to the step S19. However, if the count value of the effective counter 440a is equal to or more than 1, and the effective state is held, the on-attack flag 440c is turned off to subtract the target HP (target HP data 440d) in a step S 13. That is, by turning the on-attack flag 440c off in the step S 13, the holding of effective state in the state transition process of the target described later is cancelled. Thus, when the bullet hits the target, the hold of the effective state is canceled, and thereafter, the effective state and the ineffective state are switched, capable of providing difficulty of shooting the target to some extent. That is, it is possible to increase an interest of the game.

Then, in a step S15, it is determined whether or not the target HP is 0. That is, whether or not the numerical value indicative of the target HP data 440d is "0". If "NO" in the step S 15, that is, if the target HP is not 0, it is determined that the enemy object 104 does not die, and the process proceeds to the step S19. However, if "YES" in the step S15, that is, if the target HP is 0, it is determined that the enemy object 104 dies, and the player object 102 wins the battle, the game clear flag is turned on in a step S17 to end the fighting scene process as shown Figure 11. Accordingly, in the game main process, when the game clear flag is turned on, by determining that the current state is cleared, the game is progressed so as to change to a next stage.

As shown Figure 11, in the step S19, it is determined whether or not the bullet hits the player object 102. That is, as described by use of Figure 9, it is determined whether or not the bullet shot by the player object 102 hits the player object 102 itself due to the bullet being reflected by the enemy object 104, and so forth. If "NO" in the step S19, that is, if the bullet does not hit the player object 102, the process directly returns to the step S1 shown in Figure 10.

On the other hand, if "YES" in the step S19, that is, if the bullet hits the player object 102, the player HP (player HP data 440e) is subtracted in a step S21. Then, in a step S23, it is determined whether or not the player HP is 0. That is, it is determined whether or not the numerical value indicative of the player HP data 440e is "0". If "NO" in the step S23, that is, if the player HP is not 0, it is determined that the player object 102 does not die and the battle is continued, and then, the process returns to the step S1. On the other hand, if "YES" in the step S23, that is, if the player HP is 0, the game over flag is turned on in a step S25, and the battle scene process is ended. Accordingly, when the game over flag is turned on, the game end process included in the game main process is executed to end the game.

Figure 12 is a flowchart showing the state transition process in the step S1 shown in Figure 10. When the CPU 40 starts the state transition process of the target, it determines whether or not the count value of the effective counter 440a is larger than "1" in a step S31.

If "YES" in the step S31, that is, if the count value of the effective counter 440a is equal to or more than "2", the effective counter 440a is decremented (subtract 1 from the count value) in a step S33, and then, the process directly returns to the target state transition process. That is, in a case the count value of the effective counter 440a is equal to or more than "2", the effective state is held irrespective of whether or not the player object 102 is on attack.

On the other hand, if "NO" in the step S31, that is, if the count value of the effective counter 440a is equal to or less than "1", it is determined whether or not the count value of the effective counter 440a is equal to 1 in a step S35.

If "YES" in the step S35, that is, if the count value of the effective counter 440a is equal to 1, it is determined whether or not the on-attack flag 440c is turned on in a step S37. Here, if the on-attack flag 440c is turned on, "YES" is determined in the step S37, and the state transition process is directly returned. Thus, in a case of "YES" in the step S37, the effective counter 440a is not decremented, and the effective state is held (maintained) without rendering the count value "0". That is, if the player object 102 shoots the bullet in the effective state, the effective state is maintained until the end of the attack, and is never switched to the ineffective state during the attack, capable of making the most use of the bullet shot by the player object 102. That is, the shooting operation of the gun by the player comes to nothing.

However, if the on-attack flag 440c is turned off, "NO" is determined in the step S37, the effective counter 440a is decremented and the ineffective counter 440b is reset (set) in a step S39, and then, the state transition process of the target is returned. That is, in the step S39, the count value of the effective counter 440a is equal to "0", and the count value according to the table for counter 440f is set to the ineffective counter 440b to shift to the ineffective state.

Alternatively, if "NO" in the step S35, that is, if the count value of the effective counter 440a is equal to "0", it is determined the count value of the ineffective counter 440b is larger than "1" in a step S41. If "YES" in the step S41, that is, if the count value of the ineffective counter 440b is equal to or more than "2", the ineffective counter 440b is decremented in a step S43, and then, the state transition process of the target is returned. In this case, the ineffective state is held.

However, if "NO" in the step S41, that is, if the count value of the ineffective counter 440b is equal to "1", the ineffective counter 440b is decremented and the effective counter 440a is reset (set) in a step S45, and the state transition process of the target is returned. That is, in the step S45, the count value of the ineffective counter 440b is equal to "0", and the count value according to the table for counter 440f is set to the effective counter 440a to shift to the effective state.

Thus, the effective state and the ineffective state are switched by the count values of the effective counter 440a and the ineffective counter 440b every predetermined time period defined by the count value and per unit of time. However, in a case that it is determined that the player object 102 is on attack in the effective state, the effective state is held (maintained) irrespective of the predetermined time period.

According to this embodiment, in a case that the player object is on attack in the effective state, the effective state is held, capable of being sure to making the most use of the bullet shot by the player object. That is, the shooting operation by the player never comes to nothing. Thus, it becomes possible to savor an original interest of shooting in the shooting game and further, the player is never suspicious about the determination whether the bullet hits or not due to the timing shifted from the effective state to the ineffective state.

It is noted that although the entire enemy object is a target and the target is shifted between the effective state and the ineffective state in this embodiment, this is not limited thereto. For example, only a part (mouth, eye, etc.) of the enemy object can be regarded as a target. In such a case, a state in which the part of the target can be attacked is rendered an effective state while a state in which the part of the target cannot be attacked is rendered ineffective state, and it may be possible that these states are switched every predetermined time period. For example, in a case that the part of the target is eyes, a state in which the eyes are opened is the effective state, and a state in which the eyes are closed is the ineffective state.

Furthermore, a case that the enemy object (target) is displayed by a first property is rendered the effective state, and a case that it is displayed by a second property is rendered the ineffective state in this embodiment. However, it may be possible that similarly to the conventional shooting game, a state in which the target appears from shadows is rendered the effective state, and a state in which the target hides within shadows is rendered the ineffective state.

In addition, although a description is made on the hand-held type game machine (game apparatus) in this embodiment, this is not limited thereto. For example, it is also applicable to video game apparatuses for home use and portable phones having a game function, etc. Furthermore, this is applicable to video game apparatuses for home use or an arcade game utilizing a gun shaped controller.

Although the present invention has been described and illustrated in detail, it is clearly understood that the same is by way of illustration and example only and is not to be taken by way of limitation, the scope of the present invention being limited only by the terms of the appended claims.

## Claims

1. A shooting game apparatus provided with at least a display means and an operating means, with which a player plays a game by shooting a target displayed on said display means according to an operation of said operating means by a player, comprising:
a target state switching means for switching according to a predetermined condition between an ineffective state in which said target is not damaged even if a bullet hits said target and an effective state in which said target is damaged when a bullet hits said target; and
a shooting state determining means for determining whether or not at least a shooting is performed in response to an input from said operating means by said player, wherein
said target state switching means holds said effective state when it is determined that the shooting is performed in said effective state by said shooting state determining means.

2. A shooting game apparatus according to claim 1, wherein
said target state switching means switches between said effective state and said ineffective state at every predetermined time period when it is determined the shooting is not performed in said effective state by said shooting state determining means.

3. A shooting game apparatus according to claim 1, further comprising a target hit determining means for determining whether or not the bullet hits said target in said effective state, wherein
said target state switching means cancels hold of said effective state when it is determined that said bullet hits said target by said target hit determining means.

4. A shooting game apparatus according to claim 1, wherein
said display means further displays a player object that performs at least a shooting action according to an operation by the player, further comprising
a player object position storing means for storing a position of said player object within a virtual game space, a target position storing means for storing a position of a target within said virtual game space, and an activating means for activating said target state switching means when the position of said player object and the position of said target have a predetermined relationship.

5. A shooting game apparatus provided with at least a display means and an operating means, with which a player instructs at least an action of a player object according to an operation of said operating means by a player, and thereby plays a game by shooting a target displayed on said display means, comprising;
a player object controlling means for controlling an action of said player object in response to an operation of said operating means;
a target state switching means for switching according to a predetermined condition between an ineffective state in which said target is not damaged even if a bullet hits said target and an effective state in which said target is damaged when a bullet hits said target; and
a shooting state determining means for determining whether or not said player object performs a shooting in response to an operation of said operating means, wherein
said target state switching means holds said effective state when it is determined that the shooting is performed in said effective state by said shooting state determining means.

6. A storage medium storing a game program to be executed by a shooting game apparatus provided with at least a display means and an operating means, with which a player plays a game by shooting a target displayed on said display means according to an operation of said operating means by said player,
said game program causes a processor of said shooting game apparatus to execute following steps of:
a target state switching step for switching according to a predetermined condition between an ineffective state in which said target is not damaged even if a bullet hits said target and an effective state in which said target is damaged when a bullet hits said target; and
a shooting state determining step for determining whether or not at least a shooting is performed in response to an input from said operating means by said player, wherein
said target state switching step holds said effective state when it is determined that the shooting is performed in said effective state by said shooting state determining step.

7. A storage medium storing a game program according to claim 6, wherein
said target state switching step switches between said effective state and said ineffective state at every predetermined time period when it is determined the shooting is not performed in said effective state by said shooting state determining step.

8. A storage medium storing a game program according to claim 6, wherein
said game program further executes a target hit determining step for determining whether or not the bullet hits said target in said effective state; and
said target state switching step cancels hold of said effective state when it is determined that said bullet hits said target by said target hit determining step.

9. A storage medium storing a game program to be executed by a shooting game apparatus provided with at least a display means and an operating means, with which a player instructs at least an action of a player object according to an operation of said operating means by a player, and thereby plays a game by shooting a target displayed on said display means,
said game program causes a processor of said shooting game apparatus to execute following steps of:
a player object controlling step for controlling an action of said player object in response to an operation of said operating means;
a target state switching step for switching according to a predetermined condition between an ineffective state in which said target is not damaged even if a bullet hits said target and an effective state in which said target is damaged when a bullet hits said target; and
a shooting state determining step for determining whether or not said player object performs a shooting in response to an operation of said operating means, wherein
said target state switching step holds said effective state when it is determined that the shooting is performed in said effective state by said shooting state determining step.

10. A game controlling method of a shooting game apparatus provided with at least a display means and an operating means, with which a player plays a game by shooting a target displayed on said display means according to an operation of said operating means by a player,
(a) a step of switching according to a predetermined condition between an ineffective state in which said target is not damaged even if a bullet hits said target and an effective state in which said target is damaged when a bullet hits said target ; and
(b) a step of determining whether or not at least a shooting is performed in response to an input from said operating means by said player, wherein
said step (a) includes a step (a-1) of holding said effective state when it is determined that the shooting is performed in said effective state by said step (b).

11. A game controlling method according to claim 10, wherein said step (a) includes a step (a-2) of switching between said effective state and said ineffective state at every predetermined time period when it is determined the shooting is not performed in said effective state by said step (b).

12. A game controlling method according to claim 10, further comprising a step (c) of determining whether or not the bullet hits said target in said effective state, wherein said step (a) includes a step (a-3) of canceling hold of said effective state when it is determined that said bullet hits said target by said step (c).

13. A game controlling method of a shooting game apparatus provided with at least a display means and an operating means, with which a player instructs at least an action of a player object according to an operation of said operating means by a player, and thereby plays a game by shooting a target displayed on said display means, comprising;
(a) a step of controlling an action of said player object in response to an operation of said operating means;
(b) a step of switching according to a predetermined condition between an ineffective state in which said target is not damaged even if a bullet hits said target and an effective state in which said target is damaged when the bullet hits said target; and
(c) a step of determining whether or not said player object performs a shooting in response to an operation of said operating means, wherein
said step (b) includes a step (b-1) of holding said effective state when it is determined that the shooting is performed in said effective state by said step (c).
